# EUROPEAN PATENT SPECIFICATION

(11) **EP 1 556 747 B1**
(45) Date of publication and mention of the grant of the patent: **07.01.2009**
(21) Application number: 03759743.2
(22) Date of filing: 03.10.2003
(51) Int. Cl.: G05G 1/04

(54) **SYMMETRIC CLAMP STRUCTURE**
SYMMETRISCHE KLEMMSTRUKTUR
STRUCTURE DE SERRAGE SYMETRIQUE

(30) Priority: 04.10.2002 US 416129 P
(43) Date of publication of application: 27.07.2005
(73) Proprietor: SRAM, LLC., Chicago, IL 60642 (US)
(72) Inventor: LUMPKIN, Wayne, Littleton, CO 80123 (US)
(74) Representative: Winckels, Johannes Hubertus F.
(86) International application number: PCT/US2003/031694
(87) International publication number: WO 2004/033924

(56) References cited:
- US-A- 4 261 666
- US-A- 4 308 761
- US-E- R E19 386

## Description

### TECHNICAL FIELD

The present invention is directed toward clamp structures, and more particularly toward a symmetric clamp structure for clamping bicycle components to a bicycle frame.

### BACKGROUND ART

Bicycles are generally constructed of tubular frame members having tubular handlebars. It is necessary to attach components such as brake levers to the bicycle frame or handlebars. Certain components must have attachment mechanisms which allow the component to be secured at various positions along the length of a tubular frame and/or rotated about the circumference of the tubular frame member. It is also important when attaching components such as brake levers that the components be relatively easy to remove for repair or replacement. A variety of clamping structures have been developed to achieve the desired degree of freedom in the placement of such components. For example, brake levers have typically been mounted to handlebars by means of simple two part clamp structures analogous to a plumber's pipe clam. Such prior art clamps are tightened by means of one or two bolts or screws as is shown in Nagano, U.S. Patent No. 4,611,500 or Tripp, U.S. Patent No. 3,733,922.

It is a continuing goal of bicyclists and bicycle component designers to reduce the weight of the components used in high performance bicycles. To accomplish the goal of reduced weight while maintaining high performance, designers have turned to the use of exotic metal alloys for components such as brake levers and the associated mounting apparatus. Parts made of exotic alloys are generally cast and machined such that the amount of the relatively expensive materials from which they are manufactured and the component weight is minimized. Therefore, traditional pipe-clamp style mounting structures may not be suitable for the mounting of modem high performance components.

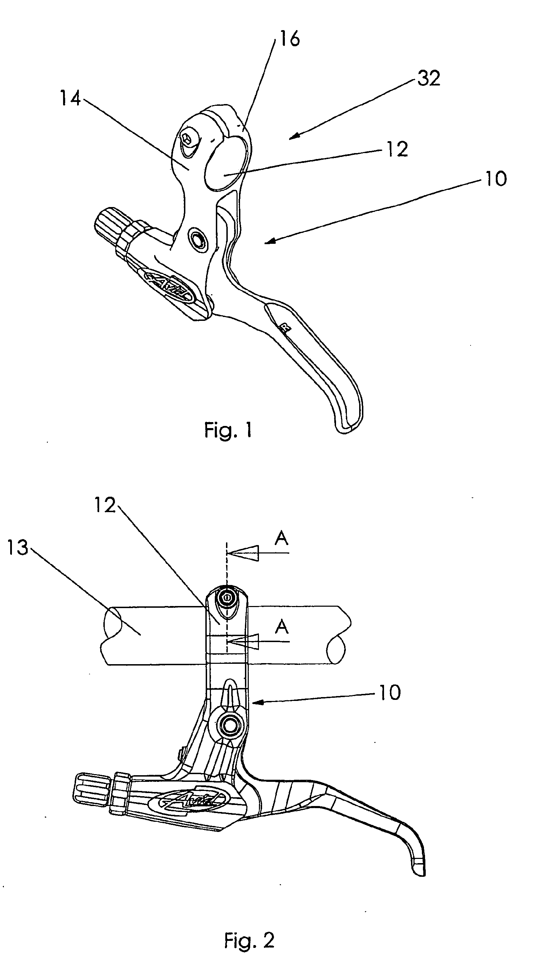

It is now generally preferred in the art to cast the mounting structure and other components of a brake lever mechanism as a single piece. Representative examples are shown in Tsai, U.S. Patent No. 5,669,268 and Chen, U.S. Patent No. 5,564,311. The brake levers shown in these references feature a generally annular mounting clamp sized to fit over a handlebar and tightened into place by tightening a screw which closes a gap between an arm of the clamp structure and the body of the brake lever. This operational configuration is best shown in Fig. 1 of Chen.

Preparation of a high performance integrated hand brake lever support and mounting bracket system typically requires the manufacture of separate right and left brake levers. The need to create separate left and right handed castings along with the associated need to set up mirror imaged tooling and milling processes can significantly increase the cost of manufacturing high performance brake lever sets. In addition, separate left and right levers requires retailers to maintain excessive stock. This short coming of the prior art is partially addressed in Chen where a modified brake cable attachment apparatus is taught which allows a brake lever to be mounted in a reversed orientation on both sides of a handlebar. The Chen solution does, however, require that the bolt which tightens the clamp holding the brake lever to the handlebar be positioned facing upward on one side of the bicycle and downward on the other side of the bicycle. This configuration potentially hampers easy adjustment of the brake lever orientation on the handlebars by the operator. In addition, this configuration is asymmetrical and can be aesthetically unappealing. Finally, the clamp structure taught by Chen and similar art features only one threaded bore typically milled in the brake support structure opposite the arm of the clamp. If the threaded bore of the prior art mechanisms becomes stripped or otherwise damaged, the clamp structure will become useless.

The present invention is directed toward overcoming one or more of the problems discussed above.

### SUMMARY OF THE INVENTION

A symmetric clamp structure has a first arm and a second arm, both the first arm and the second arm having coaxial threaded bores through their distal ends. The symmetric clamp structure also includes a screw having a shank, the shank having a head at one end and being threaded at a second opposite end. The threaded portion of the shank is sized and has a pitch appropriate for threadably engaging the screw with either of the threaded bores through the distal ends of the first and second arms of the clamp structure. The shank of the screw also has a clearance portion between the threaded portion and the head. The screw is threadably engaged with one of the first or second threaded bores such that the screw head abuts the arm opposite the threaded engagement. The clearance portion has an outer diameter sized to clear the tips of the threads of the threaded bores and a length at least equal to the axial length of each threaded bore. Preferably, the axial length of the clearance portion exceeds the axial length of each threaded bore.

Another aspect of the present invention is a method of attaching a clamp to a frame consisting of providing a frame and providing a symmetric clamp structure having first and second arms. The first and second arms of the clamp structure have distal ends defining coaxial threaded bores through each arm. The threading of the bores through each arm has essentially the same size and pitch. The method further consists of providing a screw having a shank with a head at one end and a threaded portion at a second opposite end. The threaded portion of the screw is sized to threadably engage both the first and second threaded bores through the arms of the clamp structure. The shank also has a clearance portion between the threaded portion and the head. The screw is engaged with the clamp by screwing the threaded portion into threaded engagement with the bore of either the first or second arm such that the head abuts the arm opposite the threaded engagement and the clearance portion clears the thread tips of the threaded bore opposite the threaded engagement. The clamp is placed over the frame such that the frame is received between the first and second arms of the clamp and clamping is accomplished by tightening the screw thereby driving the distal ends of the first and second arms toward each other clamping the frame. Preferably the frame of Applicant's method is a tubular bicycle frame or handlebar. Applicant's method and apparatus provide a symmetrical clamp so that the screw can be removed from threaded engagement with the first or second arm as is appropriate and either the screw or the clamp can be rotated 180° to the opposite orientation after which the screw can be reengaged with the other arm and tightened while still maintaining the ability to clamp the frame.

A further aspect Not part of the present invention is a method of manufacturing a symmetric clamp structure. The method consists of providing a clamp body having a first arm and a second arm with the distal end of each arm being substantially adjacent to each other and separated by a gap. First and second coaxial cylindrical threaded bores are formed through the distal ends of the first and second arms. A screw having a head at one end and a threaded shank extending from the head to an opposite end is provided. The threaded shank of the screw is sized to threadably engage the threaded bores formed through the distal ends of the first and second arms. A clearance portion is formed on the shank of the screw between the head and the opposite end of the shank such that the clearance portion extends toward but not to the opposite end of the screw, thus leaving a portion of the shank opposite the head threaded. The clamp is assembled by threadably engaging the screw with one of the first or second threaded bores such that the head of the screw abuts the arm opposite the threaded engagement and the clearance portion of the screw clears the threads of the threaded bore opposite the threaded engagement. The screw may be assembled with the symmetric clamp structure in either orientation and threadably engaged with either threaded bore. Thus, if one threaded bore becomes stripped or otherwise damaged the symmetric clamp is not rendered useless.

In a further aspect not part of the present invention, a bicycle brake lever is disclosed. The brake lever has a housing, a lever pivotably attached to the housing, and a clamp attached to the housing. The clamp is a symmetric clamp structure as disclosed above which is used and manufactured as described herein.

### BRIEF DESCRIPTION OF THE DRAWINGS

Fig. 1 is a perspective view of a bicycle brake lever featuring a symmetric clamp structure;
Fig. 2 is a side elevation view of the bicycle brake lever of Fig. 1 receiving a bicycle handlebar;
Fig. 3 is an exploded, cross-sectional view along line A-A of Fig. 2;
Fig. 4A is an assembled cross-sectional view along line A-A of Fig. 2; and
Fig. 4B is an assembled cross-sectional view showing the screw of Fig. 4A inserted from an opposite direction

### DETAILED DESCRIPTION OF THE PREFERRED EMBODIMENT

A bicycle lever 10 is shown in a perspective view in Fig. 1. The bicycle lever 10 includes a clamp 12 for fastening the lever to a bicycle handlebar. Fig. 2 is a side elevation view of the bicycle lever 10 featuring the clamp 12 receiving a bicycle handlebar 13.

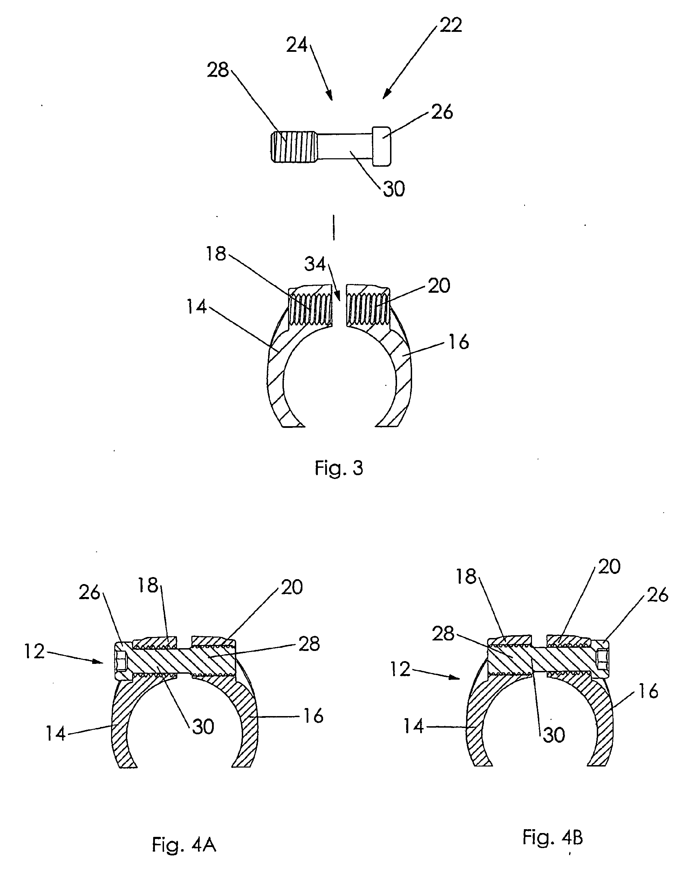

Fig. 3 is an exploded cross-sectional view taken along line A-A of Fig. 2: The clamp 12 consists of a first arm 14 and a second arm 16. At a distal end of the first arm 14 is a first threaded bore 18 and at the distal end of the second arm 16 is a second threaded bore 20. The first and second threaded bores 18, 20 are essentially coaxial. "Essentially coaxial" means sufficiently aligned that a screw 22 can be received as illustrated in Figs. 4A and 4B. The screw 22 has a shank 24 having a head 26 at one end and a threaded portion 28 at a second end opposite the first end. The threaded portion 28 is configured to threadably engage the first and second threaded bores 18, 20 of the distal ends of the first and second arms 14, 16. The shank 24 further includes a clearance portion 30 between the threaded portion 28 and the head 26. The clearance portion 30 has an outer diameter sized to clear the threaded bores 18, 20 of the distal ends and a length at least equal to the axial length of each threaded bore 18, 20, and preferably longer, as seen in Fig. 4A.

Referring to Fig. 4A, with the screw 22 axially received in the first and second bores 18, 20 with the head 26 abutting the end of the first bore 18 and the threaded portion 28 of the shank 24 threadably engaged with the second bore 20, the head 26 can drive the end of the first arm 14 toward the second arm 16 as the screw 22 is tightened with the threaded bore of the first end 18 clearing the clearance portion 30 of the shank 24. Significantly, the screw 22 can also be inserted with the head 26 abutting the second arm 16 and the threaded portion 28 engaging the threaded bore 18, as illustrated in Fig. 4B. This has several advantages over a conventional clamp having a fully threaded screw and a clearance bore as opposed to the clearance portion 30 of the shank 24. A conventional connection as described above cannot allow the screw to be inserted from both ends and still perform the clamping function. In addition, if a conventional screw strips the bore threads, the clamp becomes useless. In the present invention, if a threaded bore 18, 20 becomes stripped, the screw 22 can simply be inserted the other direction and the clamp 12 will still function. Moreover, as illustrated in Figs. 1, 2 and 3, the present invention allows the screw 22 to go in from either side, allowing the clamp 12 to be aesthetically symmetric. Thus, a single lever 10 of Fig. 1 can be used on a right or left side of a handlebar and a screw 22 can be inserted so that it appears that each lever 10 is custom made to go on the right or left side.

Although depicted above in conjunction with a bicycle lever 10, the clamp 12 can be used to clamp other types of components to frames.

Manufacture of a suitable clamp 12 is accomplished by providing a clamp body 32 which has been cast or milled to have a first arm 14 and a second arm 16 which are substantially adjacent to each other and separated by a gap 34. Subsequent to casting the clamp body 32, coaxial cylindrical threaded bores 18, 20 can be milled through the distal end of the first 14 and second 16 arms. The threaded bores 18, 20 should be milled to have threads of substantially the same pitch and size. In addition, the spacing of the thread pitch should be maintained through the gap 34 such that a screw 22 can be screwed through one of the threaded bores 18, 20 and the gap 34 and be in a position to threadably engage the second threaded bore 18, 20. Alternatively, a smooth bore may be milled through the first and second arms 14, 16 receiving a threaded inserts of a suitable, durable material.

The screw 22 may be manufactured from stock or a suitably sized machine screw may be used. The screw 22 which is manufactured or selected must have threads which are sized and have a pitch which corresponds to the threaded bores 18, 20 milled into the clamp body 32. In addition the screw 22 must have a head 26 at the end of a shank 24 opposite the threaded portion 28. Preferably the head 26 is a typical machine screw head having an inset Allen-type driving socket. Upon selection or manufacture of a suitable screw, a clearance portion 30 is milled on the shank 24 of the screw 22 between the head 26 and the opposite end of the shank 24 such that the clearance portion 30 extends toward but not to the end of the screw 22 opposite the head 26. The clearance portion 30 is manufactured by removing the threads from the clearance portion region of the shank 24 such that the final diameter of the shank 24 in the clearance portion 30 is reduced to a size which will allow the clearance portion 30 to clear the tips of the threads of the threaded bores 18, 20 when the screw 22 is threadably engaged with the clamp body 32. This configuration is best shown in Fig. 4. In addition, the axial length of the clearance portion 30 must equal and preferably exceed the axial length of the threaded bores 18, 20. This configuration allows the screw 22 to be axially received in either of the first and second bores 18, 20 with the head abutting the end of the opposite bore such that the head 26 can drive the end of the first arm 14 toward the second arm 16 as the screw is tightened with the threaded bore of the first end clearing the clearance portion 30 of the shank 24.

After manufacture of the clamp body 32 and the screw 22, the clamp 12 is assembled by threadably engaging the screw 22 with one of the first or second threaded bores 18, 20 such that the head 26 of the screw 22 abuts the arm 14,16 opposite the threaded engagement. The screw 22 may be assembled with the clamp body 32 in either orientation and threadably engaged with either threaded bore 18, 20.

## Claims

1. A symmetric clamp (12) structure comprising:
a first arm (14) having a distal end defining a first threaded bore (18);
second arm (16) having a distal end defining a second threaded bore (20), wherein the first threaded bore (18) and the second threaded bore (20) are essentially coaxial; and
a screw (22) comprising a head (26) and a shank (24), the head (26) being at one end of the shank (24) and the shank (24) having a threaded portion (28) at a second end opposite the first end and a clearance portion (30) between the threaded portion (28) and the head (26), the screw (22) being configured so that with a threaded engagement between the threaded portion (28) of the shank (24) and one of the first and second threaded bores (18,20) and the head (26) abutting one of the first and second arms (14,16) opposite the threaded engagement, the clearance portion (30) resides within the other of the first and second threaded bores (18,20).

2. The symmetric clamp (12) structure of claim 1 wherein the clearance portion (30) has an outer diameter sized to clear the first and second threaded bores (18,20) and a length at least equal to the axial length of each threaded bore (18,20).

3. The symmetric clamp (12) structure of claim 1 wherein a length of the clearance portion (30) exceeds an axial length of each threaded bore (18,20).

4. The symmetric clamp (12) structure of any of the preceding claims further comprising each of the first and second arms (14,16) having a proximal end attached to a bicycle component.

5. The symmetric clamp (12) structure of claim 4 wherein the bicycle component is a brake lever.

6. The symmetric clamp (12) structure of claim 5 wherein the brake lever comprises a housing and the first and second arms (14,16) are attached at proximal ends to the housing, the first and second arms (14,16) being configured to receive a bicycle handle bar (13) axially therebetween with a space defined between the essentially coaxial distal ends of the first and second arms (14,16).

7. A bicycle comprising the symmetric clamp (12) structure of any of claims 1-6.

8. A method of attaching a clamp (12) of claim 1 to a frame comprising:
providing a frame;
placing the clamp (12) over the frame with the frame received between the first and second arms (14,16);
engaging the screw (22) with the clamp (12) by screwing the threaded portion (28) into threaded engagement with one of the first and second bores (18,20) such that the head (26) abuts the arm opposite the threaded engagement and the clearance portion (30) clears the threads of the threaded bore (18,20) opposite the threaded engagement; and
tightening the screw (22) thereby driving the distal ends of the first and second arms (14,16) toward each other and attaching the clamp (12) from the frame.

9. The method of claim 8 wherein the frame is at least one of a tubular bicycle frame and tubular bicycle handle bar (13).

10. The method of any of claims 8 or 9, further comprising removing the screw (22) from threaded engagement with one of the first and second arms (14,16) and engaging and tightening the screw (22) in an opposite orientation such that the screw (22) is threadably engaged with the other arm (14,26).

## Patentansprüche

1. Symmetrische Klemmstruktur (12), enthaltend:
einen ersten Schenkel (14) mit einem hinteren Ende, das eine erste Gewindebohrung (18) bestimmt; einen zweiten Schenkel (16) mit einem hinteren Ende, das eine zweite Gewindebohrung (20) bestimmt, wobei die erste Gewindebohrung (18) und die zweite Gewindebohrung (20) im wesentlichen koaxial angeordnet sind, und eine Schraube (22) mit einem Kopf (26) und einem Schaft (24), wobei der Kopf (26) an einem Ende des Schaftes (24) liegt und der Schaft (24) einen Gewindeabschnitt (28) an einem zweiten Ende entgegengesetzt zu dem ersten Ende und einen Freibereich (30) zwischen dem Gewindeabschnitt (28) und dem Kopf (26) aufweist, die Schraube (22) derart gestaltet ist, dass bei einer Verschraubung des Gewindeabschnitts (28) des Schafts (24) mit einer der ersten und zweiten Gewindebohrungen (18, 20) und bei an einem der ersten und zweiten Schenkel (14, 16) entgegengesetzt zu der Verschraubung anliegendem Kopf (26) der Freibereich (30) in der anderen der ersten und zweiten Gewindebohrungen (18, 20) liegt.

2. Symmetrische Klemmstruktur (12) nach Anspruch 1, bei der der Freibereich (30) einen Außendurchmesser hat, der so bemessen ist, dass die ersten und zweiten Gewindebohrungen (18, 20) nicht berührt werden, und eine Länge hat, die wenigstens gleich der axialen Länge einer jeden Gewindebohrung (18, 20) ist.

3. Symmetrische Klemmstruktur nach Anspruch 1, bei der eine Länge des Freibereichs (30) eine axiale Länge einer jeden Gewindebohrung (18, 20) überschreitet.

4. Symmetrische Klemmstruktur nach einem der vorhergehenden Ansprüche, bei der weiterhin jeder der ersten und zweiten Schenkel (14, 16) ein vorderes Ende hat, das an einer Fahrradkomponente befestigt ist.

5. Symmetrische Klemmstruktur nach Anspruch 4, bei der die Fahrradkomponente ein Bremshebel ist.

6. Symmetrische Klemmstruktur nach Anspruch 5, bei der der Bremshebel ein Gehäuse aufweist und die ersten und zweiten Schenkel (14, 16) an vorderen Enden des Gehäuses befestigt sind, wobei die ersten und zweiten Schenkel (14, 16) derart gestaltet sind, dass sie eine Fahrradlenkstange (13) axial zwischen sich mit einem Zwischenraum aufnehmen, der zwischen den im wesentlichen koaxialen hinteren Enden der ersten und zweiten Schenkel (14, 16) bestimmt ist.

7. Fahrrad, enthaltend die symmetrische Klemmstruktur (12) nach einem der Ansprüche 1 bis 6.

8. Verfahren zum Befestigen einer Klemme (12) nach Anspruch 1 an einem Rahmen, umfassend:
Bereitstellen eines Rahmens;
Ansetzen der Klemme (12) über dem Rahmen, wobei der Rahmen zwischen den ersten und zweiten Schenkeln (14, 16) aufgenommen wird;
Verbinden der Schraube (22) mit der Klemme (12) durch Einschrauben des Gewindeabschnitts (28) mit Verschraubung in eine der ersten und zweiten Bohrungen (18, 20) derart, dass der Kopf (26) an dem der Verschraubung gegenüberliegenden Schenkel (14, 16) anliegt und der Freibereich (20) gegenüber den Gewindegängen der der Verschraubung gegenüberliegenden Gewindebohrung (18, 20) frei ist; und
Festziehen der Schraube (22), um **dadurch** die hinteren Enden der ersten und zweiten Schenkel (14, 16) zueinander zu ziehen und die Klemme (12) an dem Rahmen festzulegen.

9. Verfahren nach Anspruch 8, bei dem der Rahmen ein Fahrrad-Rohrrahmen und/oder eine rohrförmige Fahrradlenkstange ist.

10. Verfahren nach einem der Ansprüche 8 und 9, weiterhin enthaltend das Lösen der Schraube (22) aus der Verschraubung mit einem der ersten und zweiten Schenkel (14, 16) und das Einschrauben und Festziehen der Schraube (22) in entgegengesetzter Richtung derart, dass die Schraube (22) mit dem anderen Schenkel (14, 16) verschraubt ist.

## Revendications

1. Structure de bride symétrique (12) comprenant :
un premier bras (14) présentant une extrémité distale définissant un premier alésage fileté (18) ;
un second bras (16) présentant une extrémité distale définissant un second alésage fileté (20), dans laquelle le premier alésage fileté (18) et le second alésage fileté (20) sont sensiblement coaxiaux ; et
une vis (22) comprenant une tête (26) et une tige (24), la tête (26) étant à une extrémité de la tige (24) et la tige (24) présentant une partie filetée (28) au niveau d'une seconde extrémité opposée à la première extrémité et une partie libre (30) entre la partie filetée (28) et la tête (26), la vis (22) étant configurée de telle sorte qu'avec une partie couplée par vissage entre la partie filetée (28) de la tige (24) et l'un des premier et second alésages filetés (18, 20) et la mise en butée de la tête (26) sur l'un des premier et second bras (14, 16) opposé à la partie couplée par vissage, la partie de libre (30) se trouve à l'intérieur de l'autre des premier et second alésages filetés (18, 20).

2. Structure de bride symétrique (12) selon la revendication 1, dans laquelle la partie libre (30) présente un diamètre externe dimensionné de manière à passer librement à travers les premier et second alésages filetés (18, 20) et une longueur au moins égale à la longueur axiale de chaque alésage fileté (18, 20).

3. Structure de bride symétrique (12) selon la revendication 1, dans laquelle une longueur de la partie libre (30) excède une longueur axiale de chaque alésage fileté (18, 20).

4. Structure de bride symétrique (12) selon l'une quelconque des revendications précédentes, comprenant, en outre, le fait qu'une extrémité proximale de chacun des premier et second bras (14, 16) est liée à un composant de bicyclette.

5. Structure de bride symétrique (12) selon la revendication 4, dans laquelle le composant de bicyclette est un levier de frein.

6. Structure de bride symétrique (12) selon la revendication 5, dans laquelle le levier de frein comprend un logement et les premier et second bras (14, 16) sont fixés aux extrémités proximales du logement, les premier et second bras (14, 16) étant configurés de manière à recevoir un guidon de bicyclette (13) axialement entre eux avec un espace défini entre les extrémités distales sensiblement coaxiales des premier et second bras (14, 16).

7. Bicyclette comprenant la structure de bride symétrique (12) selon l'une quelconque des revendications 1 à 6.

8. Procédé de fixation d'une bride (12) selon la revendication 1, sur un cadre comprenant :
la formation d'un cadre ;
la mise en place de la bride (12) sur le cadre, le cadre étant reçu entre les premier et second bras (14, 16) ;
le couplage de la vis (22) avec la bride (12) en vissant la partie filetée (28) en une partie couplée par vissage avec l'un des premier et second alésage (18, 20) de telle sorte que la tête (26) vienne en butée sur le bras (14, 16) opposé à la partie couplée par vissage et la partie libre (30) passe librement à travers le filetage de l'alésage fileté (18, 20) opposé à la partie couplée par vissage ; et
le serrage de la vis (22) entraînant ainsi les extrémités distales des premier et second bras (14, 16) l'une vers l'autre et fixant ainsi la bride (12) sur le cadre.

9. Procédé selon la revendication 8, dans lequel le cadre est au moins l'un d'un cadre de bicyclette tubulaire et d'un guidon de bicyclette tubulaire (13).

10. Procédé selon l'une quelconque des revendications 8 ou 9, comprenant, en outre, le retrait de la vis (22) de la partie couplée par vissage avec l'un des premier et second bras (14, 16) et le couplage et le serrage de la vis (22) suivant une orientation opposée, de telle sorte que la vis (22) soit couplée par vissage avec l'autre bras (14, 16).
